# EUROPÄISCHE PATENTSCHRIFT

(11) **EP 1 143 837 B1**
(45) Veröffentlichungstag und Bekanntmachung des Hinweises auf die Patenterteilung: **24.09.2003**
(21) Anmeldenummer: 99970842.3
(22) Anmeldetag: 02.11.1999
(51) Int. Cl.: A47J 31/40

(54) **KAFFEEBRÜHER**
COFFEE BREWER
MACHINE A CAFE

(30) Priorität: 06.11.1998 DE 19852531
(43) Veröffentlichungstag der Anmeldung: 17.10.2001
(73) Patentinhaber: Tchibo Frisch-Röst-Kaffee GmbH, 22297 Hamburg (DE)
(72) Erfinder: KAATZE, Michael, D-21255 Tostedt (DE)
(74) Vertreter: UEXKÜLL & STOLBERG
(86) Internationale Anmeldenummer: EP9908271
(87) Internationale Veröffentlichungsnummer: WO00028867

(56) Entgegenhaltungen:
- EP-A- 0 432 111
- EP-A- 0 627 187
- EP-A- 0 843 982
- US-A- 3 103 873

## Beschreibung

Die Erfindung betrifft einen Kaffeebrüher gemäß Oberbegriff des Patentanspruchs 1.

Aus der EP 0 627 187 B1 ist ein derartiger Kaffeebrüher bekannt, der zwei nebeneinander angeordnete Zylinder aufweist, die je eine Brühkammer bilden. Die Zylinder werden oben durch ein Abschlußelement verschlossen, das in einer horizontalen Führung bewegbar ist. Das untere Ende der Zylinder wird von zwei ebenfalls in horizontaler Richtung verschiebbaren Kolben verschlossen, die je ein Extraktionssieb tragen. Im Betrieb sitzen die Zylinder zunächst über den Kolben, so daß diese in die Zylinder eintauchen. Die Höhe der Kolben ist so bemessen, daß die an ihrem oberen Ende angeordneten Extraktionssiebe in einer Endstellung, bei der die Zylinder in vertikaler Richtung ganz nach unten bewegt sind, mit der Oberseite der Zylinder fluchten, so daß verbrauchtes Kaffeemehl abgestreift werden kann. Nachdem diese Reinigung erfolgt ist, werden in einem nächsten Schritt die Zylinder in vertikaler Richtung hochgefahren, um einen Hohlraum zu bilden, der letztendlich die Brühkammer darstellt. Sobald dies geschehen ist, wird Kaffeemehl von oben in abgemessenen Portionen eingefüllt. Anschließend wird das Abschlußelement nach vorne gefahren, so daß es über den Zylindern positioniert wird. In dem Abschlußelement ist für jeden Zylinder ein Sprührohr vorgesehen, durch das Brühwasser in die so gebildeten Brühkammern eingeleitet werden kann. Bei dem bekannten Kaffeebrüher werden die Zylinder also nur in senkrechter Richtung bewegt, während die Bewegungen des Abschlußelements und der Kolben nur in waagerechter Richtung und damit orthogonal zur Zylinderbewegung erfolgt.

Aufgabe der Erfindung ist es, einen neuartigen Kaffeebrüher zu schaffen, bei dem die Bewegungsverhältnisse von Zylinder, Deckel und Boden anders als beim Stand der Technik sind, um bei nur einem Antriebsmotor eine geringere Bauhöhe zu erreichen.

Zur Lösung dieser Aufgabe dient der Kaffeebrüher der eingangs genannten Art, der die kennzeichnenden Merkmale des Patentanspruchs 1 aufweist.

Durch diese neuartige Konstruktion werden Deckel und Boden nicht im rechten Winkel gegenüber dem Zylinder verschoben, sondern über ein Gestänge zunächst hochgeklappt und anschließend in Führungen zurückgezogen.

Die Erfindung wird nun anhand einer Zeichnung näher erläutert; es zeigen:
- **Figur 1**: ein Ausführungsbeispiel in der Ausgangsstellung;
- **Figur 2**: das Ausführungsbeispiel bei einem Drehwinkel von 35°; und
- **Figur 3**: das Ausführungsbeispiel bei einem Drehwinkel von 97°.

Da es dem Fachmann klar ist, wie Kaffee-Brühautomaten in Einzelheiten aufgebaut sind, beispielsweise gemäß EP 0 627 187 B1, wird der erfindungsgemäße Kaffeebrüher hier nur anhand einer Schemazeichnung erläutert, wobei in allen Figuren gleiche Teile mit gleichen Bezugszeichen versehen sind. Einander entsprechende Teile sind ebenfalls mit gleichen Bezugszeichen und zusätzlich durch einen Apostroph gekennzeichnet.

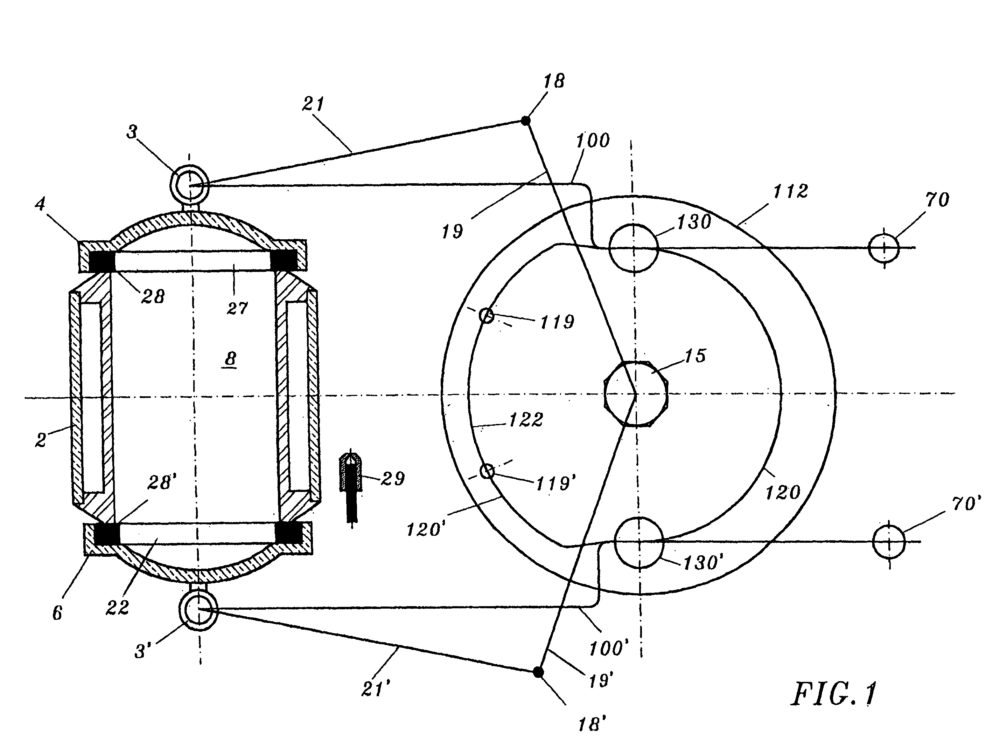

Demzufolge zeigt **Figur 1** einen Zylinder 2, der an seinem oberen Ende durch einen Deckel 4 und an seinem unteren Ende durch einen Boden 6 verschlossen ist. Der so geschlossene Zylinder 2 bildet dadurch eine Brühkammer 8 zum Brühen eines Kaffeegetränks aus Kaffeemehl und Heißwasser. Das Kaffeemehl wird bei geöffnetem Deckel 4 von oben in die Brühkammer 8 eingefüllt und fällt auf ein Extraktionssieb 22, das in dem Boden 6 angeordnet ist. Unter dem Extraktionssieb 22 befindet sich ein Hohlraum, der in einen nicht dargestellten Getränkeauslaß übergeht, so daß das Kaffeegetränk dadurch abfließen kann. Um das Extraktionssieb 22 ist ein Dichtungsring 28' gelegt, der den Unterrand des Zylinders 2 in geschlossenem Zustand abdichtet.

Das Einleiten von Brühwasser erfolgt über einen ebenfalls nicht dargestellten Wassereinlaß in dem Deckel 4, wobei außerdem im Deckel 4 eine Siebplatte 27 angeordnet ist, die das Brühwasser in der Art einer Brause in die Brühkammer 8 einleitet. Um die Siebplatte 27 ist wiederum ein Dichtungsring 28 gelegt, der den Oberrand des Zylinders 2 in geschlossenem Zustand abdichtet.

Auf halber Höhe der Brühkammer 8 ist neben dem Zylinder 2 eine Welle 15 angeordnet, die eine Kurvenscheibe 112 trägt. Die Kurvenscheibe 112 weist in ihrem rechten Teil einen ersten halbkreisförmigen Abschnitt 120 mit einem ersten Radius auf, an den im linken Teil ein zweiter halbkreisförmiger Abschnitt 120' mit größerem Radius über Übergangsbereiche anschließt und damit eine Steuerungs-Kulisse 122 bildet. Die Kulisse 122 ist in einer Ausführung eine einseitig in die Kurvenscheibe 112 eingearbeitete Nut, von der die Teilkreislinie oder halbe Höhe als voll ausgezogene Linie eingezeichnet ist.

In der Kulisse 122 laufen zwei Rollen 130 und 130', deren Mittelpunkte demgemäß auf der Teilkreiskontur der Kulisse 122 liegen. Die Rollen 130, 130' sind an einem oberen bzw. unteren Gestänge 100, 100' drehbar montiert, so daß sie das Gestänge 100, 100' je nach Stellung der Kurvenscheibe 112 anheben oder absenken können. Um dies zu ermöglichen sind die rechten Enden der Gestänge 100, 100' an festliegenden oberen und unteren Drehpunkten 70, 70' schwenkbar angebracht. Die festliegenden oberen und unteren Drehpunkte 70, 70' der Gestänge 100, 100' bilden einarmige Hebel, die mit ihren rechten Enden an den festliegenden Drehpunkten 70, 70' angelenkt sind und durch die Kurvenscheibe 112 über die Rollen 130, 130' den Deckel 4 bzw. den Boden 6 vom Zylinder 2 abheben, da die anderen Enden über erste und zweite Gelenke 3, 3' mit dem Deckel 3 bzw. dem Boden 4 verbunden sind.

Man erkennt in **Figur 1,** daß die Gestänge 100, 100' abgewinkelt sind. Diese Maßnahme ist zweckmäßig, um eine Anpassung zwischen der Höhe des Zylinders 2 und dem Durchmesser der Kurvenscheibe 112 herzustellen.

**Figur 1** zeigt ferner einen ersten Rückziehhebel 19, der frei drehbar auf der Welle 15 einer Steuerscheibe sitzt und der über ein viertes Gelenk 18 und eine Zugstange 21 über das erste Gelenk 3 mit dem Deckel 4 gekoppelt ist. Auf ähnliche Weise ist ein zweiter Rückziehhebel 19' drehbar auf der Welle 15 angeordnet und über ein viertes Gelenk 18' und eine Zugstange 21' mit dem Boden 6 gekoppelt, und zwar über das erste Gelenk 3'.

**Figur 1** zeigt außerdem ein ersten Betätigungszapfen 119 zum Drehen des ersten Rückziehhebels 19 im Uhrzeigersinn um die Welle 15, während ein zweiter Betätigungszapfen 119' bei Berührung des zweiten Rückziehhebels 19' diesen gegen den Uhrzeigersinn um die Welle 15 dreht. Die beiden Betätigungszapfen 119 und 119' sind dazu an geeigneter Stelle der Kurvenscheibe 112 angebracht und stehen von dieser in axialer Richtung vor, nämlich so weit, daß sie die Rückziehhebel 19, 19' bei Berührung mitnehmen und im Uhrzeigersinn oder gegen den Uhrzeigersinn um die Welle 15 schwenken können. Es ist für den Fachmann klar, daß die Betätigungszapfen 119, 119' zu diesem Zweck nicht so angeordnet sein dürfen, daß sie die Funktion der Kurvenscheibe 112 behindern.

Eine Möglichkeit der baulichen Realisierung besteht darin, die Betätigungszapfen 119, 119' und die Rückziehhebel 19, 19' an einer Seite der Kurvenscheibe 112 anzuordnen, während die Kulisse 122 zusammen mit dem Gestänge 100, 100' an der anderen Seite der Kurvenscheibe 112 angeordnet wird.

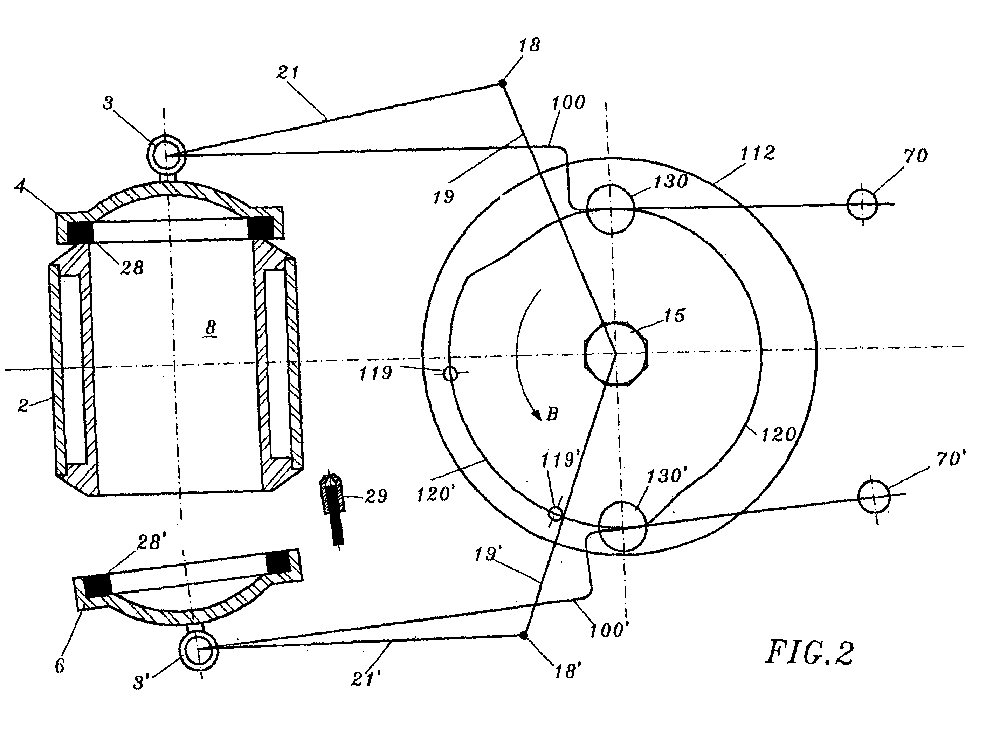

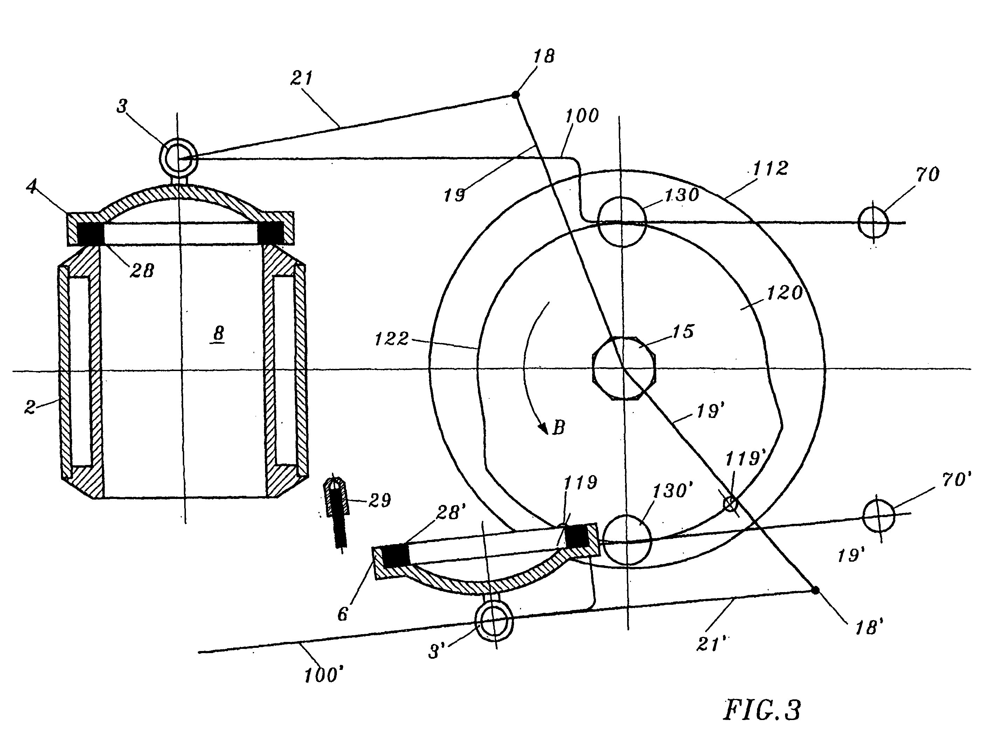

**Figur 2** zeigt die Ausführungsform der Erfindung, bei der die Kurvenscheibe 112 von einem nicht dargestellten, die Welle 15 antreibenden Motor um einen Drehwinkel von 35° Grad in Richtung des Pfeils B gegen den Uhrzeigersinn gedreht ist. In dieser Stellung kommt der zweite Betätigungszapfen 119' in Kontakt mit dem zweiten Rückziehhebel 19' und nimmt diesen bei einer weiteren Drehung der Kurvenscheibe 112 bis zu einer Position mit, wie sie als Endstellung in **Figur 3** gezeigt ist.

Bei der in **Figur 2** gezeigten Stellung ist die Rolle 130' vom ersten, im Radius kleineren Abschnitt 120 der Kulisse 122 in den zweiten, größeren Abschnitt 120' hochgelaufen und hat damit das untere Gestänge 100' um den unteren Drehpunkt 70' gegen den Uhrzeigersinn geschwenkt, wodurch das andere Ende des unteren Gestänges 100', das an dem Gelenk 3' des Bodens 6 angelenkt ist, den Boden 6 vom Zylinder 2 so weit wie möglich abgehoben hat. Figur 2 demonstriert damit die maximale Öffnung des Bodens 6 gegenüber dem Zylinder 2, und zwar unmittelbar vor dem Zurückziehen des Bodens 6 vom Zylinder 2.

**Figur 3** zeigt schließlich das Ausführungsbeispiel in der Endstellung des zweiten Rückziehhebels 19', der bei einem Drehwinkel von 97° Grad den Boden 6 so weit wie möglich vom Zylinder 2 zurückgezogen hat, und zwar in der dargestellten Ausführungsform bis über den Abstreifer 29 hinaus, so daß das nach dem Brühvorgang auf dem Boden 6 verbliebene Kaffeemehl vollständig abgestreift werden konnte.

Das Kippen des Bodens 6 erfolgt vor allem dann, wenn dieser an einem Abstreifer 29 in der in **Figur 3** gezeigten Weise vorbeibewegt wird. Der Abstreifer 29 ist über einen nicht dargestellten Abstreiferhalter am unteren Gestänge 10' montiert.

Es wird darauf hingewiesen, daß die Rückziehhebel 19, 19' durch eine um die Welle 15 montierte Schraubenfeder oder durch eine Spiralfeder in Position Zylinder 2 gedreht werden, um den Deckel 4 bzw. Boden 6 nach dem Zurückziehen vom Zylinder 2 wieder in Richtung Zylinder 2 zu bewegen.

## Patentansprüche

1. Kaffeebrüher mit einem Gehäuse in dem ein Zylinder (2) angeordnet ist, dessen oberes Ende durch einen Deckel (4) und dessen unteres Ende durch einen Boden (6) verschließbar ist, so daß im geschlossenen Zustand eine Brühkammer (8) für die Aufnahme von Kaffeemehl und Brühwasser gebildet wird, wobei zum Öffnen der Brühkammer (8) sowohl der Boden (6) als auch der Deckel (4) von dem Zylinder (2) entfernt werden können und wobei in dem Deckel (4) ein Wassereinlaß und in dem Boden (6) ein Extraktionssieb und ein Getränkeauslaß angeordnet sind, **dadurch gekennzeichnet, daß** der Deckel (4) und der Boden (6) von einem oberen bzw. unteren Gestänge (100, 100') jeweils um einen festliegenden oberen bzw. unteren Drehpunkt (70, 70') durch Drehen einer Kurvenscheibe (112) schwenkbar sind, die eine Steuerungs-Kulisse (122) aufweist, mit der sie bei einer Drehung um ihre Achse das Gestänge (100, 100') vom Zylinder (2) abhebt oder gegen diesen drückt.

2. Brüher nach Anspruch 1, **dadurch gekennzeichnet, daß** auf der Achse einer Steuerscheibe zwei schwenkbare Rückziehhebel (19, 19') angeordnet sind, die über je ein viertes Gelenk (18, 18') und je eine Zugstange (21, 21') mit dem Deckel (4) bzw. dem Boden (6) gekoppelt sind.

3. Brüher nach Anspruch 1, **dadurch gekennzeichnet, daß** das obere und untere Gestänge (100, 100') mit je einer Schiene für das Zurückziehen des Deckels (4) und des Bodens (6) ausgerüstet sind, die ebenfalls um die Drehpunkte (70, 70') schwenkbar sind.

4. Brüher nach Anspruch 1, **dadurch gekennzeichnet, daß** die Kurvenscheibe (112) nahezu mittig zwischen dem oberen und dem unteren Gestänge (100, 100') angeordnet ist.

5. Brüher nach Anspruch 2, **dadurch gekennzeichnet, daß** die Rückziehhebel (19, 19') durch Kontakt mit einem auf der Kurvenscheibe (112) angeordneten Zapfen (119, 119') um die Welle (15) schwenkbar und durch Zugfedern, Druckfedern oder Drehfedern in ihre Ausgangsstellungen zurück bewegbar sind.

6. Brüher nach Anspruch 1, **dadurch gekennzeichnet, daß** in der Nähe des Bodens (6) ein Abstreifer (29) für verbrauchtes Kaffeemehl angeordnet ist.

7. Brüher nach Anspruch 2, **dadurch gekennzeichnet, daß** das obere und untere Gestänge (100, 100') über je eine Rolle (130, 130') mit der Kurvenscheibe (112) in Eingriff stehen.

8. Brüher nach Anspruch 7, **dadurch gekennzeichnet, daß** die Rollen (130, 130') in einer Nut der Kurvenscheibe (112) laufen, wobei die Nut eine Steuerungs-Kulisse (122) bildet.

## Claims

1. A coffee machine having a housing in which a cylinder (2) is disposed, the upper end of which can be closed by a lid (4) and the lower end of which can be closed by a base (6), so that in the closed state a brewing chamber (8) is formed for receiving ground coffee and water, wherein to open the brewing chamber (8) both the base (6) and the lid (4) can be removed from the cylinder (2) and wherein a water inlet is disposed in the lid (4) and an extraction filter and a beverage outlet are disposed in the base (6),
**characterised in that** the lid (4) and the base (6) can be swivelled by means of an upper or lower rod assembly (100, 100') around a fixed upper or lower fulcrum (70, 70') in each case by turning a cam plate (112) comprising a control slotted link (122) with which it raises the rod assembly (100, 100') from the cylinder (2) or presses it against said cylinder during a rotation around its axis.

2. A coffee machine according to Claim 1,
**characterised in that** two swivelling retraction levers (19, 19'), which are coupled to the lid (4) or the base (6) via a fourth articulation (18, 18') and a connecting rod (21, 21'), are disposed on the axis of a disk cam.

3. A coffee machine according to Claim 1,
**characterised in that** the upper and lower rod assembly (100, 100') are each equipped with a bar for the retraction of the lid (4) and of the base (6), which can also swivel around the fulcrums (70, 70').

4. A coffee machine according to Claim 1,
**characterised in that** the cam plate (112) is disposed almost centrally between the upper and the lower rod assembly (100, 100').

5. A coffee machine according to Claim 2,
**characterised in that** the retraction levers (19, 19') can swivel by contact with a pin (119, 119') disposed on the cam plate (112) around the shaft (15) and can be moved back into their initial positions by tension springs, compression springs or torsion springs.

6. A coffee machine according to Claim 1,
**characterised in that** a stripper (29) for used ground coffee is disposed in the vicinity of the base (6).

7. A coffee machine according to Claim 2,
**characterised in that** the upper and lower rod assembly (100, 100') each engage with the cam plate (112) via a roller (130, 130').

8. A coffee machine according to Claim 7,
**characterised in that** the rollers (130, 130') run in a groove in the cam plate (112), the groove forming a slotted link (122).

## Revendications

1. Machine à café comprenant un boîtier dans lequel est disposé un cylindre (2), dont l'extrémité supérieure peut être vérouillée par un couvercle (4) et dont l'extrémité inférieure peut être fermée par un fond (6), de sorte qu'à l'état fermé, une chambre à ébouillanter (8) soit formée pour le logement du café moulu et de l'eau bouillante, moyennant quoi pour ouvrir la chambre à ébouillanter (8), le fond (6) et le couvercle (4) peuvent être retirés du cylindre (2) et moyennant quoi une entrée d'eau est disposée dans le couvercle (4) et un filtre d'extraction et une sortie de boisson sont disposés dans le fond (6), **caractérisée en ce que** le couvercle (4) et le fond (6) peuvent être pivotés par des tiges supérieures ou inférieures (100, 100') respectivement autour d'un centre de rotation (70, 70') fixe supérieur ou inférieur, en tournant le disque à came (112), qui présente une coulisse de guidage (122), avec laquelle elle soulève les tiges (100, 100') depuis le cylindre (2), ou les pressent contre celui-ci, lors d'une rotation autour de son axe.

2. Machine à café selon la revendication 1, **caractérisée en ce que** deux leviers de rappel (19, 19') pivotants sont disposés sur l'axe d'un plateau-came, lesquels leviers sont couplés au couvercle (4) ou au fond (6) par l'intermédiaire de respectivement une quatrième articulation (18, 18') et respectivement une tige de traction (21, 21').

3. Machine à café selon la revendication 1, **caractérisée en ce que** les tiges supérieures et inférieures (100, 100') sont équipées respectivement d'un rail pour le retrait du couvercle (4) et du fond (6), qui peuvent pivoter également autour des centres de rotation (70, 70').

4. Machine à café selon la revendication 1, **caractérisée en ce que** le disque à came (112) est disposée presque au centre entre les tiges supérieures et inférieures (100, 100').

5. Machine à café selon la revendication 2, **caractérisée en ce que** les leviers de rappel (19, 19') peuvent pivoter autour de l'arbre (15) en étant en contact avec un tourillon (119, 119') disposé sur le disque à came (112), et peuvent être redéplacés dans leurs positions de départ par des ressorts de traction, des ressort de pression, ou des ressort de torsion.

6. Machine à café selon la revendication 1, **caractérisée en ce qu'**un racleur (29) pour le café moulu utilisé est disposé près du fond (6).

7. Machine à café selon la revendication 2, **caractérisée en ce que** les tiges supérieures et inférieures (100, 100') sont en prise avec le disque à came (112) grâce à un rouleau (130, 130') chacun.

8. Machine à café selon la revendication 7, **caractérisée en ce que** les rouleaux (130, 130') s'étendent dans une rainure du disque à came (112), moyennant quoi la rainure forme une coulisse de guidage (122).
